# EUROPÄISCHE PATENTSCHRIFT

(11) **EP 1 498 648 B1**
(45) Veröffentlichungstag und Bekanntmachung des Hinweises auf die Patenterteilung: **05.03.2008**
(21) Anmeldenummer: 04015877.6
(22) Anmeldetag: 06.07.2004
(51) Int. Cl.: F16K 37/00

(54) **Stellungsmelder für Hubventilantriebe**
Position sensor for piston drive
Capteur de position pour actionneur de soupape

(30) Priorität: 14.07.2003 DE 20310778 U
(43) Veröffentlichungstag der Anmeldung: 19.01.2005
(73) Patentinhaber: Bürkert Werke GmbH & Co. KG, 74653 Ingelfingen (DE)
(72) Erfinder: Renninger, Jürgen, 74243 Langenbrettach (DE)
(74) Vertreter: Degwert, Hartmut

(56) Entgegenhaltungen:
- WO-A-02/086365
- US-A- 2 930 344
- US-A- 5 497 725
- PATENT ABSTRACTS OF JAPAN Bd. 0103, Nr. 57 (M-540), 2. Dezember 1986 (1986-12-02) & JP 61 153080 A (TOSHIBA CORP), 11. Juli 1986 (1986-07-11)
- PATENT ABSTRACTS OF JAPAN Bd. 1997, Nr. 11, 28. November 1997 (1997-11-28) & JP 9 178034 A (HITACHI CABLE LTD), 11. Juli 1997 (1997-07-11)
- PATENT ABSTRACTS OF JAPAN Bd. 0060, Nr. 76 (M-128), 13. Mai 1982 (1982-05-13) & JP 57 015173 A (HITACHI LTD), 26. Januar 1982 (1982-01-26)

## Beschreibung

Die vorliegende Erfindung betrifft einen Stellungsmelder für Hubventilantriebe, mit einem dem Ventilhub auf einem Betätigungsweg nachgeführten Betätigungselement und wenigstens einem Positionsfühler, der einen auf das Betätigungselement ansprechenden Näherungssensor aufweist.

Für die Endlagenerfassung bzw. für die Erfassung von Zwischenstellungen bei Hubventilen werden üblicherweise Stellungsmelder mit berührungslosen Näherungsschaltern oder Endschaltern verschiedenster Funktionsprinzipien verwendet. Um diese Schalter auf verschiedene Ventilhübe einstellen zu können, ist es notwendig, daß ihre axiale Lage verändert werden kann. Zur Befestigung der Schalter werden üblicherweise Klemmschrauben verwendet, oder der Schalter wird direkt drehfest an einer Gewindestange befestigt, die durch den Schalter hindurchgeführt ist. Eine Positionsverstellung der Schalter durch Drehen der Gewindespindel ist bei einer gewünschten Verstellung über große Wege sehr umständlich und zeitaufwendig. Eine Verstellung der Position der Klemmschrauben führt jedoch zu einer ungenauen Position des Schalters.

In der JP-A-61 153080 ist ein Stellungsmelder für ein Ventil gezeigt, bei dem ein Sensor an der Ventilspindel befestigt ist. Parallel zur Ventilspindel ist eine Gewindestange angeordnet, auf der ein Element, auf den der Sensor anspricht, gehalten ist. Die Position des Elements auf der Gewindestange kann durch Drehen der Gewindestange verändert werden.

Die vorliegende Erfindung stellt einen Stellungsmelder für Hubventilantriebe mit einem Positionssensor bereit, dessen Position auf einfachste Weise bei gleichzeitig sehr hoher Positionsgenauigkeit verändert werden kann.

Gemäß der Erfindung ist der Positionsfühler mit einem Halter auf einer entlang dem Betätigungsweg angeordneten, drehbaren Gewindestange geführt wobei der Halter mit dem Gewinde der Gewindestange lösbar in Schraubeingriff und zum Verschieben über große Strecken außer Eingriff mit dem Gewinde des Gewindestange gebracht werden kann. Wird der Halter außer Eingriff mit dem Gewinde der Gewindestange gebracht, kann der Halter mit dem Positionsfühler über große Strecken in die gewünschte Position überführt werden und anschließend wieder in Eingriff mit dem Gewinde gebracht werden, so daß der Halter fest an der Gewindestange gehalten ist. Die Feinjustierung auf die gewünschte Position erfolgt dann über eine Drehung der Gewindestange.

Gemäß einer bevorzugten Ausführungsform weist der Halter zwei federnde Blechstreifen mit je einer Durchgangsöffnung auf, deren Weite wenig größer bemessen ist als der Außendurchmesser der Gewindestange, wobei sich die Gewindestange durch die miteinander fluchtenden Durchgangsöffnungen der Blechstreifen erstreckt und die Blechstreifen jeweils federnd in einer Schrägstellung zur Achse der Gewindestange gehalten sind, so daß Kanten der Durchgangsöffnungen mit dem Gewindegang der Gewindestange in Eingriff sind. Durch Zusammendrücken der zwei federnden Blechstreifen können diese außer Eingriff mit der Gewindestange gebracht werden, und der Halter kann auf einfachste Weise durch Verschieben entlang der Gewindestange auf die gewünschte Position verstellt werden. Beim Loslassen der zwei federnden Blechstreifen greifen die Kanten der Durchgangsöffnungen der Blechstreifen wieder in den Gewindegang der Gewindestange ein, so daß der Halter form- und kraftschlüssig an der Gewindestange gehalten ist.

Bevorzugterweise ist das Betätigungselement in einem Schutzrohr geführt, an dessen Außenseite der bzw. die Positionsfühler angeordnet ist bzw. sind. Das Betätigungselement ist magnetisch an das bewegliche Hubventilglied angekoppelt. Dadurch kann bei Bedarf der Stellungsmelder einfach vom Hubventil abgenommen werden, ohne daß das Schutzrohr geöffnet werden muß.

Weitere Merkmale und Vorteile der Erfindung ergeben sich aus den Unteransprüchen sowie aus der nachfolgenden Beschreibung einer bevorzugter Ausführungsform, die in den Zeichnungen dargestellt ist. In diesen zeigen:
- Figur 1 schematisch in einer perspektivischen Ansicht einen Positionsfühler mit Näherungssensor, der in einem Halter, der zwei federnde Blechstreifen aufweist, gehalten ist,
- Figur 2 schematisch in einer perspektivischen Ansicht den in Figur 1 gezeigten Positionsfühler mit Halter, durch deren Durchgangsöffnungen sich eine Gewindestange erstreckt,
- Figur 3 schematisch in einer perspektivischen Ansicht ein Schutzrohr, an dessen Außenseite zwei Positionsfühler angeordnet sind,
- Figur 4 schematisch das in Figur 3 gezeigte Schutzrohr in transparenter Darstellung, wobei in dessen Innerem ein Betätigungselement zu sehen ist, das auf den Näherungssensor des Positionsfühlers anspricht.

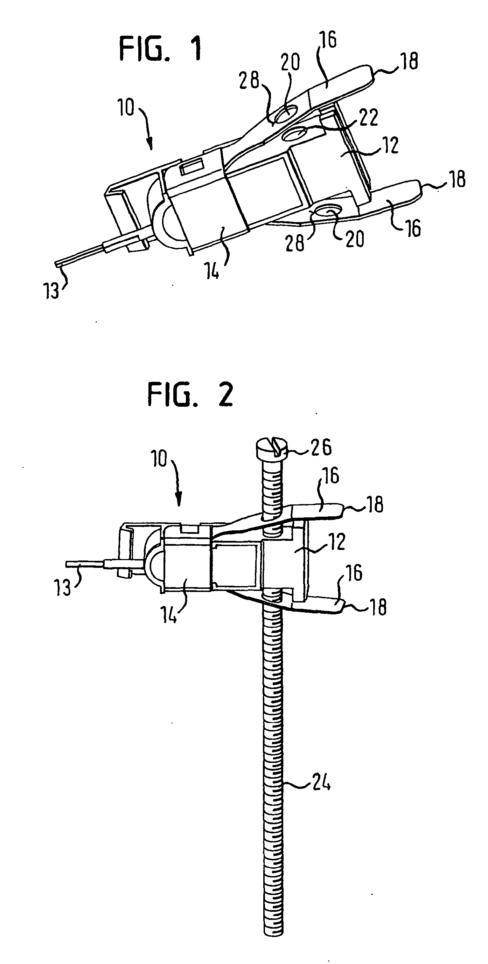

In den Figuren 1 und 2 ist ein Näherungsschalter 10 zu sehen, der einen Positionsfühler 12 mit einem Näherungssensor 13 aufweist. Der Positionsfühler 12 weist bevorzugterweise ein Kunststoffgehäuse auf, in dem eine Elektronik angeordnet ist. Ein Halter 14, der hier zwei federnde Blechstreifen 16 umfaßt, ist mit dem Positionsfühler 12 verbunden. In dem hier gezeigten Ausführungsbeispiel ist der Halter 14 mittels einer Schnappverbindung mit dem Positionsfühler 12 verbunden. Die Blechstreifen 16 weisen jeweils verlängerte freie Enden 18 auf, die als Greiflaschen geformt sind. Durch die zwei Blechstreifen 16 und durch das Gehäuse des Positionsfühlers 12 verlaufen Durchgangsöffnungen 20 bzw. 22, wobei die beiden Durchgangsöffnungen 20 der Blechstreifen 16 eine etwas größere Weite aufweisen als die Durchgangsöffnung 22 durch das Gehäuse des Positionsfühlers 12 und, wie in Figur 1 zu sehen ist, bevorzugterweise eine ovale Form aufweisen. Durch die Durchgangsöffnungen 20, 22 kann eine Gewindestange 24 mit einem Schraubenkopf 26 eingeführt werden, wie in Figur 2 zu sehen ist. Die Weite der Durchgangöffnungen 20 der zwei Blechstreifen 16 ist wenig größer bemessen als der Außendurchmesser der Gewindestange 24. Im eingeführten Zustand der Gewindestange 24 sind die Blechstreifen 16 jeweils federnd in einer Schräglage zur Achse der Gewindestange 24 gehalten, so daß Kanten 28 der Durchgangsöffnungen 20 mit dem Gewindegang der Gewindestange 24 in Eingriff sind. Die zwei Blechstreifen 16 weisen entgegengesetzte Schrägstellungen zur Achse der Gewindestange 24 auf.

Im entspannten Zustand der zwei Blechstreifen 16 sind ihre Durchgangsöffnungen 20 jeweils etwas versetzt zueinander und zu der Durchgangsöffnung 22 des Positionsfühlers 12 angeordnet, so daß diese nicht miteinander fluchten. Erst in einem gespannten Zustand der Blechstreifen 16, wenn diese aufeinander zu bewegt werden, fluchten die Durchgangsöffnungen 20 der Blechstreifen 16 miteinander und mit der Durchgangsöffnung 22 des Positionsfühlers 12, so daß die Gewindestange 24 durch die Öffnungen 20, 22 hindurchgeführt werden kann.

Die federnden Blechstreifen 16 sind bevorzugterweise aus einem Stanz- bzw. Biegeteil aus VA-Blech gebildet.

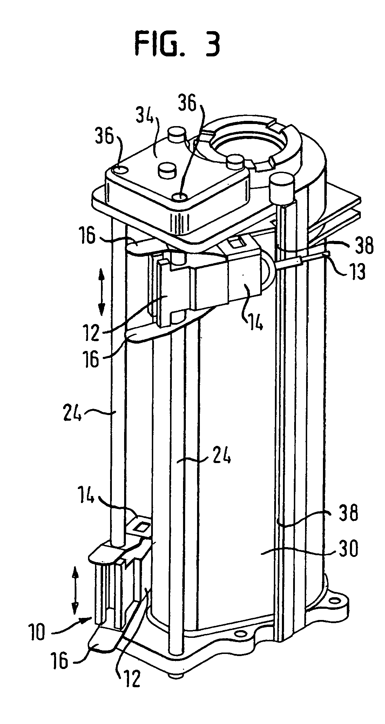

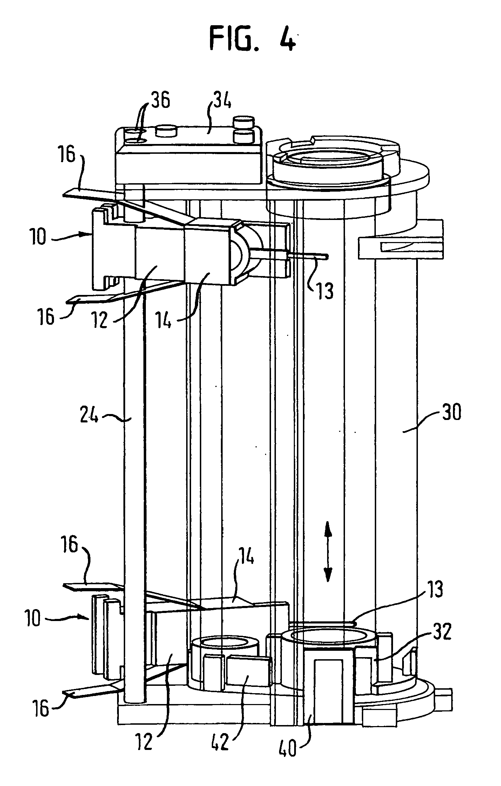

In den Figuren 3 und 4 ist ein Schutzrohr 30 abgebildet, das bevorzugterweise aus Kunststoff gebildet ist und in dem ein Betätigungselement 32 angeordnet ist, auf den der Näherungssensor 13 des Positionsfühlers 12 anspricht. An der Außenseite des Schutzrohrs 30 sind zwei Gewindestangen 24 parallel nebeneinander drehbar in einer gemeinsamen Stützplatte 34 gelagert. Die Stützplatte 34 ist am Schutzrohr 30 angeschraubt und dient zur axialen Festlegung der beiden Gewindestangen 24. In der Stützplatte 34 sind in axialer Verlängerung zu den beiden Gewindestangen 24 zwei Bohrungen 36 gebildet, durch die ein Zugriff auf die Schraubenköpfe 26 der Gewindestangen 24 möglich ist. Die beiden Positionsfühler 12, die auf den Gewindestangen 24 angeordnet sind, greifen jeweils in eine am Schutzrohr 30 ausgebildete Nut 38 ein. Dadurch sind die Positionsfühler 12 zusätzlich zu der Führung durch die Gewindestangen 24 in axialer Richtung geführt und sind außerdem gegenüber einer Drehung gesichert.

Die beiden Positionsfühler 12 sind jeweils für eine Endstellung eines Hubventils vorgesehen. Alternativ kann einer der beiden Positionsfühler oder auch beide Positionsfühler für eine bzw. zwei Zwischenstellungen des Ventils vorgesehen sein.

Das Betätigungselement 32 ist in dem Schutzrohr 30 axial in Pfeilrichtung verschiebbar angeordnet und ist dafür vorgesehen, mit einem (hier nicht abgebildeten) beweglichen Hubventilglied zusammenzuwirken. Das bewegliche Hubventilglied ist bevorzugterweise eine fest mit der Ventilspindel des Hubventils verbundene Verlängerung, die ebenfalls die Form einer Spindel hat. An ihrem freien Ende ist die Spindel magnetisch ausgebildet.

Um bei einer Betätigung des Ventils dem Betätigungsweg nachgeführt werden zu können, weist das Betätigungselement 32 einen Dauermagneten 40 auf, durch den es magnetisch mit der Verlängerung der Ventilspindel gekoppelt werden kann. Dazu ist das in den Figuren 3 und 4 gezeigte Schutzrohr 30 auf der Oberseite ("on top") auf dem Hubventil angebracht und die Spindelverlängerung wird bei einer Betätigung des Ventils nach oben aus dem Hubventil herausgeführt.

Im hier gezeigten Ausführungsbeispiele sind an dem Betätigungselement 32 zwei Bleche 42 (von denen in Figur 4 nur eines zu sehen ist), beispielsweise aus VA-Stahl angebracht, die jeweils mit einem Positionsfühler 12 induktiv zusammenwirken.

Die Funktionsweise des erfindungsgemäßen Stellungsmelders für Hubventilantriebe ist folgendermaßen:
Wird das Hubventil von einem entsprechenden Antrieb von seiner einen Endstellung in die dem Ventilhub entsprechende andere Endstellung überführt, bewegt sich die Verlängerung der Ventilspindel in axialer Richtung entsprechend dem Betätigungsweg des Ventils und wirkt auf das im Schutzrohr 30 angeordnete Betätigungselement 32, das magnetisch mit der Verlängerung gekoppelt ist. Dadurch wird entsprechend der Bewegung der Verlängerung der Ventilspindel das Betätigungselement 32 in axialer Richtung im Schutzrohr 30 bewegt. Befindet sich das Betätigungselement 32 in etwa auf gleicher axialer Höhe wie einer der Positionsfühler 12, wird dies durch den Näherungssensor 13 des Positionsfühlers 12 erfaßt und der Ventilantrieb wird ausgeschaltet, so daß die Bewegung des Hubventilgliedes gestoppt wird.

Zur Verstellung eines Näherungsschalters 10 und damit des Ventilhubs werden für größere Verstellwege die zwei Blechstreifen 16 so zusammengedrückt, daß sie aufeinander und auf das Gehäuse des Positionsfühlers 12 zubewegt werden. Dadurch kommen die Kanten 28 der Durchgangsöffnungen 20 der Blechstreifen 16 außer Eingriff mit dem Gewindegang der Gewindestange 24 und die Durchgangsöffnungen 20, 22 fluchten miteinander, so daß der Positionsfühler 12 entlang der Gewindestange 24 (in Pfeilrichtung der Figur 3) in die gewünschte Position bewegt werden kann. Ist in etwa die gewünschte Position erreicht, können die Blechstreifen 16 durch Loslassen wieder in ihre Ausgangsposition überführt werden, in der die Kanten 28 der Durchgangsöffnungen 20 in Eingriff mit dem Gewindegang der Gewindestange 24 sind, so daß der Näherungsschalter 10 form- und kraftschlüssig an der Gewindestange 24 gehalten ist. Zur Feineinstellung auf die gewünschte Position kann nun mit Hilfe eines Schraubendrehers über die in der Stützplatte 34 vorgesehene Bohrung 36 die Gewindestange 24 in Drehung versetzt werden, was je nach Drehrichtung zu einer axialen Verschiebung des Näherungsschalters 10 nach oben bzw. unten auf der Gewindestange 24 führt, da der Näherungsschalter 10 drehfest auf der Gewindestange 24 befestigt ist.

Bei einem erfindungsgemäße Stellungsmelder ist eine Verstellung des Ventilhubs, auch über größere Wege, auf einfachste Weise und mit sehr hoher Positionsgenauigkeit möglich.

Alternativ zu dem in den Figuren 1 und 2 gezeigtem Halter ist gemäß der Erfindung auch ein Halter vorgesehen, der einen federnden Blechstreifen mit einer Durchgangsöffnung aufweist, deren Weite wenig größer bemessen ist als der Außendurchmesser der Gewindestange, wobei sich die Gewindestange durch die Durchgangsöffnung des Blechstreifens erstreckt und der Blechstreifen federnd in einer Schrägstellung zur Achse der Gewindestange gehalten ist, so daß Kanten der Durchgangsöffnung mit dem Gewindegang der Gewindestange in Eingriff sind.

Anstatt eines induktiven Positionsfühlers, wie im beschriebenen Beispiel, ist erfindungsgemäß auch ein Positionsfühler mit einem kapazitiven oder optischen Sensor, oder einem Hall-Sensor vorgesehen, der dann mit einem auf den entsprechenden Sensor ansprechenden Betätigungselement zusammenwirkt.

Ferner kann der Stellungsmelder anstatt auf dem Ventil, wie in dem hier beschriebenen Ausführungsbeispiel, auch seitlich des Ventils oder zwischen dem Ventilantrieb und dem Fluidikteil des Ventils angebracht werden.

## Patentansprüche

1. Stellungsmelder für Hubventilantriebe, mit einem dem Ventilhub auf einem Betätigungsweg nachgeführten Betätigungselement (32) und wenigstens einem Positionsfühler (12), der einen auf das Betätigungselement (32) ansprechenden Näherungssensor (13) aufweist, **dadurch gekennzeichnet, daß** der Näherungssensor (13) mit einem Halter (14) auf einer entlang dem Betätigungsweg angeordneten, drehbaren Gewindestange (24) geführt ist, wobei der Halter (14) mit dem Gewinde der Gewindestange (24) lösbar in Schraubeingriff und zum Verschieben über große Strecken außer Eingriff mit dem Gewinde der Gewindestange (24) gebracht werden kann.

2. Stellungsmelder nach Anspruch 1, bei dem der Halter einen federnden Blechstreifen mit einer Durchgangsöffnung aufweist, deren Weite wenig größer bemessen ist als der Außendurchmesser der Gewindestange, wobei sich die Gewindestange durch die Durchgangsöffnung des Blechstreifens erstreckt und der Blechstreifen federnd in einer Schrägstellung zur Achse der Gewindestange gehalten ist, so daß Kanten der Durchgangsöffnung mit dem Gewindegang der Gewindestange in Eingriff sind.

3. Stellungsmelder nach Anspruch 1, bei dem der Halter (14) zwei federnde Blechstreifen (16) mit je einer Durchgangsöffnung (20) aufweist, deren Weite wenig größer bemessen ist als der Außendurchmesser der Gewindestange (24), wobei sich die Gewindestange (24) durch die miteinander fluchtenden Durchgangsöffnungen (20) der Blechstreifen (16) erstreckt und die Blechstreifen (16) jeweils federnd in einer Schrägstellung zur Achse der Gewindestange (24) gehalten sind, so daß Kanten (28) der Durchgangsöffnungen (20) mit dem Gewindegang der Gewindestange (24) in Eingriff sind.

4. Stellungsmelder nach Anspruch 3, bei dem die Blechstreifen (16) entgegengesetzte Schrägstellungen zur Achse der Gewindestange (24) aufweisen.

5. Stellungsmelder nach Anspruch 3 oder 4, bei dem die Blechstreifen (16) verlängerte freie Enden (18) aufweisen, die als Greiflaschen geformt sind.

6. Stellungsmelder nach einem der Ansprüche 2 bis 5, bei dem die Durchgangsöffnung (20) eine ovale Form aufweist.

7. Stellungsmelder nach einem der vorstehenden Ansprüche, bei dem für jede Endstellung des Hubventils ein Positionsfühler (12) vorgesehen ist.

8. Stellungsmelder nach Anspruch 7, bei dem die Gewindestangen (24) beider Positionsfühler (12) parallel nebeneinander drehbar in einer gemeinsamen Stützplatte (34) gelagert sind.

9. Stellungsmelder nach einem der vorstehenden Ansprüche, bei dem das Betätigungselement (32) in einem Schutzrohr (30) geführt ist, an dessen Außenseite der bzw. die Positionsfühler (12) angeordnet ist bzw. sind.

10. Stellungsmelder nach Anspruch 9, bei dem das Betätigungselement (32) magnetisch an das bewegliche Hubventilglied angekoppelt ist.

## Claims

1. A position indicator for a lift valve drive, comprising an actuating element (32) tracking the valve lift on an actuation path and at least one position detector (12) including a proximity sensor (13) which is responsive to the actuating element (32), **characterized in that** the proximity sensor (13) is guided with a holder (14) on a rotatable threaded rod (24) arranged along the actuation path, the holder (14) being adapted to be releasably brought into threaded engagement with the thread of the threaded rod (24) and out of engagement therewith for being shifted over large distances.

2. The position indicator according to claim 1, in which the holder includes a resilient sheet metal strip having a through opening the width of which is dimensioned to be slightly larger than the outside diameter of the threaded rod, the threaded rod extending through the through opening of the sheet metal strip, and the sheet metal strip being resiliently held in an oblique position in relation to the axis of the threaded rod, so that rim portions of the through opening are in engagement with the thread of the threaded rod.

3. The position indicator according to claim 1, in which the holder (14) includes two resilient sheet metal strips (16) each having a through opening (20) the width of which is dimensioned to be slightly larger than the outside diameter of the threaded rod (24), the threaded rod (24) extending through the through openings (20), in alignment with each other, of the sheet metal strips (16), and each of the sheet metal strips (16) being resiliently held in an oblique position in relation to the axis of the threaded rod (24), so that rim portions (28) of the through openings (20) are in engagement with the thread of the threaded rod (24).

4. The position indicator according to claim 3, in which the sheet metal strips (16) have opposed oblique positions in relation to the axis of the threaded rod (24).

5. The position indicator according to claim 3 or 4, in which the sheet metal strips (16) have extended free ends (18) which are shaped to form handling tabs.

6. The position indicator according to any of claims 2 to 5, in which the through opening (20) has an oval shape.

7. The position indicator according to any of the preceding claims, in which one position detector (12) is provided for each end-of-travel position of the lift valve.

8. The position indicator according to claim 7, in which the threaded rods (24) of both position detectors (12) are rotatably mounted parallel next to each other in a shared support plate (34).

9. The position indicator according to any of the preceding claims, in which the actuating element (32) is guided in a protective tube (30) having the position detector or detectors (12) arranged on the outside thereof.

10. The position indicator according to claim 9, in which the actuating element (32) is magnetically coupled with the movable lift valve member.

## Revendications

1. Détecteur de position pour actionneurs de soupapes à levée, comportant un élément d'actionnement (32) asservi à une levée de soupape sur une voie d'actionnement et au moins un palpeur de position (12) qui présente un capteur d'approche (13) réagissant à l'élément d'actionnement (32), **caractérisé en ce que** le capteur d'approche (13) est guidé avec un support (14) sur une tige filetée (24) rotative agencée le long de la voie d'actionnement, le support (14) pouvant être amené en prise de vissage de manière déconnectable avec le filetage de la tige (24) et amené hors de prise de vissage avec le filetage de la tige (24) pour un déplacement sur des grandes distances.

2. Détecteur de position selon la revendication 1, dans lequel le support présente une bande de tôle élastique avec une ouverture de passage dont la largeur a des dimensions légèrement supérieures au diamètre extérieur de la tige filetée, la tige filetée s'étendant à travers l'ouverture de passage de la bande de tôle et la bande de tôle étant retenue élastiquement dans une position oblique par rapport à l'axe de la tige filetée, de telle sorte que des arêtes de l'ouverture de passage sont en engagement avec le pas de vis de la tige filetée.

3. Détecteur de position selon la revendication 1, dans lequel le support (14) présente deux bandes de tôle (16) élastiques comportant chacune une ouverture de passage (20) dont la largeur a des dimensions légèrement supérieures au diamètre de la tige filetée (24), la tige filetée (24) s'étendant à travers les ouvertures de passage (20) alignées l'une sur l'autre, des bandes de tôle (16) élastiques, et les bandes de tôle (16) étant retenues chacune élastiquement dans une position oblique par rapport à l'axe de la tige filetée (24), de sorte que des arêtes (28) des ouvertures de passage (20) sont en engagement avec le pas de vis de la tige filetée (24).

4. Détecteur de position selon la revendication 3, dans lequel les bandes de tôle (16) présentent des positions obliques opposées par rapport à l'axe de la tige filetée (24).

5. Détecteur de position selon la revendication 3 ou 4, dans lequel les bandes de tôle (16) présentent des extrémités libres (18) prolongées qui sont façonnées sous forme de pattes de préhension.

6. Détecteur de position selon l'une des revendications 2 à 5, dans lequel l'ouverture de passage (20) présente une forme ovale.

7. Détecteur de position selon l'une des revendications précédentes, **caractérisé en ce qu'**il est prévu un palpeur de position (12) pour chaque position d'extrémité de la soupape à levée.

8. Détecteur de position selon la revendication 7, dans lequel les tiges filetées (24) des deux palpeurs de position (12) sont montées en rotation parallèlement l'une à côté de l'autre dans une plaque d'appui (34) commune.

9. Détecteur de position selon l'une des revendications précédentes, dans lequel l'élément d'actionnement (32) est guidé dans un tube de protection (30) sur la face extérieure duquel le ou les palpeurs de position (12) est/sont agencé(s).

10. Détecteur de position selon la revendication 9, dans lequel l'élément d'actionnement (32) est accouplé à l'élément de soupape de levée mobile.
